# EUROPEAN PATENT SPECIFICATION

(11) **EP 0 731 184 B1**
(45) Date of publication and mention of the grant of the patent: **26.03.2003**
(21) Application number: 96301458.4
(22) Date of filing: 05.03.1996
(51) Int. Cl.: C21D 10/00, F01D 5/28

(54) **Laser shock peened gas turbine engine compressor airfoil edges**
Gasturbinenschaufeln mit Laserschock behandelte Kanten
Aubes de turbines à gaz dont les bords sont traités par chocs laser

(30) Priority: 06.03.1995 US 399285
(43) Date of publication of application: 11.09.1996
(73) Proprietor: GENERAL ELECTRIC COMPANY, Schenectady, NY 12345 (US)
(72) Inventor: Mannava, Seetharamaiah, Cincinnati, Ohio 45241 (US); Jacobs, Larry George, Loveland, Ohio 45140 (US); Rhoda, James Edwin, Mason, Ohio 45040 (US); Rainous, Edward Atwood, Cincinnati, Ohio 45231 (US); Halila, Herbert, Cincinnati, Ohio 45224 (US)
(74) Representative: Pedder, James Cuthbert

(56) References cited:
- EP-A- 0 074 918
- EP-A- 0 085 278
- FR-A- 2 172 727
- GB-A- 302 657
- US-A- 4 937 421
- JOURNAL DE PHYSIQUE, vol. 1, no. 9, September 1991, PARIS FR, pages 1467-1480, XP000461098 J. FOURNIER ET AL: "Mechanical effects induced by shock waves generated by high energy laser pulses"

## Description

### RELATED PATENT APPLICATIONS

The present Application deals with related subject matter in co-pending U.S. Patent Serial No. 08/319,346; US-A-5492447 entitled "LASER SHOCK PEENED ROTOR COMPONENTS FOR TURBOMACHINERY", filed October 6, 1994, assigned to the present Assignee, and having three inventors in common with the present application.

The present Application deals with related subject matter in co-pending U.S. Patent Serial No. 08/(GE ATTORNEY DOCKET NO. 13DV-12141), entitled "LASER SHOCK PEENED GAS TURBINE ENGINE FAN BLADE EDGES", filed January 10, 1995, or EP-A-794264 assigned to the present Assignee, and having inventors in common with the present application.

The present Application deals with related subject matter in co-pending U.S. Patent Serial No. 08/363,362; US-A-5756965 entitled "ON THE FLY LASER SHOCK PEENING", filed December 22, 1994, assigned to the present Assignee, and having one inventor in common with the present application.

The present Application deals with related subject matter in co-pending U.S. Patent Serial No. 08/(GE ATTORNEY DOCKET NO. 13DV-12148), US-A-5531570 entitled "DISTORTION CONTROL FOR LASER SHOCK PEENED GAS TURBINE ENGINE COMPRESSOR BLADE EDGES", filed December, 1994, assigned to the present Assignee, and having inventors in common with the present application.

### BACKGROUND OF THE INVENTION

### Field of the Invention

This invention relates to gas turbine engine rotor airfoils and, more particularly, to compressor airfoil leading and trailing edges having localized compressive residual stresses imparted by laser shock peening.

### Description of Related Art

Gas turbine engines and, in particular, aircraft gas turbine engines rotors operate at high rotational speeds that produce high tensile and vibratory stress fields within the airfoils of blades and vanes that make the compressor blades susceptible to foreign object damage (FOD) and other types of vibration related damage. Vibrations may also be caused by vane wakes and inlet pressure distortions as well as other aerodynamic phenomena. This FOD causes nicks and tears and hence stress concentrations particularly in leading and trailing edges of compressor blade airfoils. These nicks and tears become the source of high stress concentrations or stress risers and severely limit the life of these blades due to High Cycle Fatigue (HCF) from vibratory stresses. Airfoil and blade damage may also result in a loss of engine due to a release of a failed blade or piece of blade. It is also expensive to refurbish and/or replace compressor blades and, therefore, any means to enhance the rotor capability and, in particular, to extend aircraft engine compressor blade life is very desirable. The present solution to the problem of extending the life of compressor blades is to design adequate margins by reducing stress levels to account for stress concentration margins on the airfoil edges. This is typically done by increasing thicknesses locally along the airfoil leading edge which adds unwanted weight to the compressor blade and adversely affects its aerodynamic performance. Another method is to manage the dynamics of the blade by using blade dampers. Dampers are expensive and may not protect blades from very severe FOD. These designs are expensive and obviously reduce customer satisfaction.

Therefore, it is highly desirable to design and construct longer lasting compressor blades that are better able to resist both low and high cycle fatigue than present compressor blades. The present invention is directed towards this end and provides a compressor blade with regions of deep compressive residual stresses imparted by laser shock peening leading and optionally trailing edge surfaces of the compressor blade.

The region of deep compressive residual stresses imparted by laser shock peening of the present invention is not to be confused with a surface layer zone of a work piece that contains locally bounded compressive residual stresses that are induced by a hardening operation using a laser beam to locally heat and thereby harden the work piece such as that which is disclosed in U.S. Patent No. 5,235,838, entitled "Method and Apparatus for Truing or Straightening Out of True Work Pieces". The present invention uses multiple radiation pulses from high power pulsed lasers to produce shock waves on the surface of a work piece similar to methods disclosed in U.S. Patent No. 3,850,698, entitled "Altering Material Properties"; U.S. Patent No. 4,401,477, entitled "Laser Shock Processing"; and U.S. Patent No. 5,131,957, entitled "Material Properties". Laser peening as understood in the art and as used herein, means utilizing a laser beam from a laser beam source to produce a strong localized compressive force on a portion of a surface. Laser peening has been utilized to create a compressively stressed protection layer at the outer surface of a workpiece which is known to considerably increase the resistance of the workpiece to fatigue failure as disclosed in U.S. Patent No. 4,937,421, entitled "Laser Peening System and Method". In EP-A-74918 shock peening is performed on the body and the edges of an airfoil to produce residual compressive stress. However, the prior art does not disclose compressor blade leading and trailing edges of the type claimed by the present patent nor the methods how to produce them. It is to this end that the present invention is directed.

### SUMMARY OF THE INVENTION

The present invention provides a gas turbine engine compressor airfoil, particularly that of a blade, as defined in claim 1 or in dependent claims 2-9, having at least one laser shock peened surface along the leading and/or trailing edges of the blade and a region of deep compressive residual stresses imparted by laser shock peening (LSP) extending from the laser shock peened surface into the blade. Preferably, the blade has laser shock peened surfaces on both suction and pressure sides of the blade wherein both sides were simultaneously laser shock peened. The present invention can be used for new, used, and repaired compressor blades.

### ADVANTAGES

Among the advantages provided by the present invention is the improved ability to safely build gas turbine engine blades designed to operate in high tensile and vibratory stress fields which can better withstand fatigue failure due to nicks and tears in the leading and trailing edges of the compressor blade and have an increased life over conventionally constructed compressor blades. Another advantage of the present invention is that compressor blades can be constructed with commercially acceptable life spans without increasing thicknesses along the leading and trailing edges, as is conventionally done, thus avoiding unwanted weight on the blade. Another advantage of constructing compressor blades without increasing thicknesses along the leading and trailing edges is improved aerodynamic performance of the airfoil that is available for blades with thinner leading and trailing edges. The present invention makes it possible to provide new and refurbished compressor blades with enhanced capability and in particular extends the compressor blade life in order to reduce the number of refurbishments and/or replacements of the blades. The present invention also allows aircraft engine compressor blades to be designed with adequate margins by increasing vibratory stress capabilities to account for FOD or other compressor blade damage without beefing up the area along the leading edges which increase the weight of the compressor blade and engine. The present invention can be advantageously used to refurbish existing compressor blades in order to ensure safe and reliable operation of older gas turbine engine compressor blades while avoiding expensive redesign efforts or frequent replacement of suspect compressor blades as is now often done or required.

### BRIEF DESCRIPTION OF THE DRAWINGS

The foregoing aspects and other features of the invention are explained in the following description, taken in connection with the accompanying drawings where:

FIG. 1 is a cross-sectional illustrative view of an exemplary aircraft gas turbine engine in accordance with the present invention.

FIG. 2 is a perspective illustrative view of an exemplary aircraft gas turbine engine compressor blade in accordance with the present invention.

FIG. 2A is a perspective illustrative view of an alternative aircraft gas turbine engine compressor blade including a laser shock peened radially extending portion along the leading edge in accordance with the present invention.

FIG. 3 is a cross sectional view through the compressor blade taken along line 3-3 as illustrated in FIG. 2.

FIG. 4 is a radially inward elevational view of the compressor blade taken along line 4-4 as illustrated in FIG. 2A overlayed with the same view of a conventional non-shock peened compressor blade and with the same view of a pre-laser shock peened blade with pre-twist of the present invention.

FIG. 5 is a schematic side view of a first laser beam pattern of laser shock peened area on the leading edge of the compressor blade illustrated in FIG. 3.

FIG. 6 is a schematic side view of a second laser beam pattern of laser shock peened area on the leading edge of the compressor blade illustrated in FIG. 3.

FIG. 7 is a schematic side view of a third laser beam pattern of laser shock peened area on the leading edge of the compressor blade illustrated in FIG. 3.

### DETAILED DESCRIPTION OF THE INVENTION

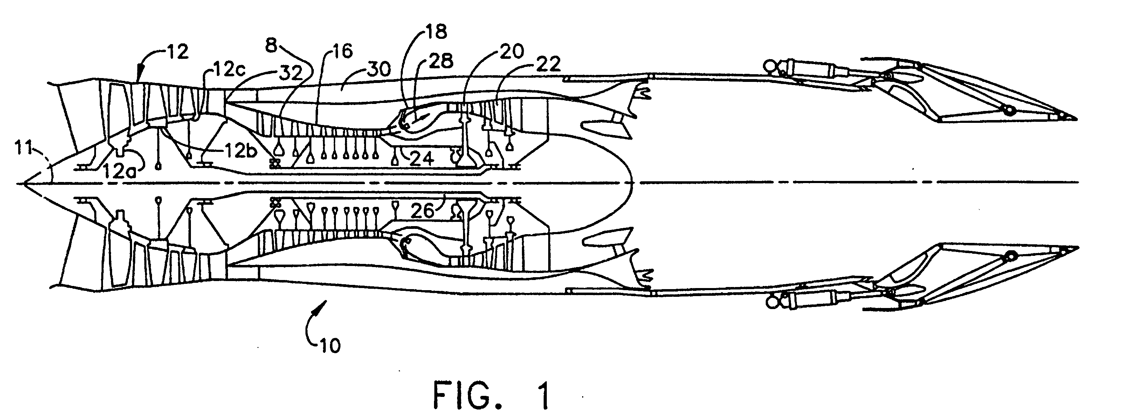

Illustrated in FIG. 1 is a schematic representation of an aircraft gas turbine engine 10 including an exemplary aircraft gas turbine engine component in the form of a compressor blade 8 in accordance with one embodiment of the present invention. The gas turbine engine 10 is circumferentially disposed about an engine centerline 11 and has, in serial flow relationship, a fan section 12, a high pressure compressor 16, a combustion section 18, a high pressure turbine 20, and a low pressure turbine 22. The combustion section 18, high pressure turbine 20, and low pressure turbine 22 are often referred to as the hot section of the engine 10. A high pressure rotor shaft 24 connects, in driving relationship, the high pressure turbine 20 to the high pressure compressor 16 and a low pressure rotor shaft 26 drivingly connects the low pressure turbine 22 to the fan section 12. Fuel is burned in the combustion section 18 producing a very hot gas flow 28 which is directed through the high pressure and low pressure turbines 20 and 22 respectively to power the engine 10. A portion of the air passing through the fan section 12 is bypassed around the high pressure compressor 16 and the hot section through a bypass duct 30 having an entrance or splitter 32 between the fan section 12 and the high pressure compressor 16. Many engines have a low pressure compressor (not shown) mounted on the low pressure rotor shaft 26 between the splitter 32 and the high pressure compressor 16. The fan section 12 is a multi-stage fan section as are many gas turbine engines as illustrated by three fan stages 12a, 12b, and 12c. The compressor blade 8 of the present invention is illustrated in the high pressure compressor 16 but may be used in a low pressure compressor if so desired.

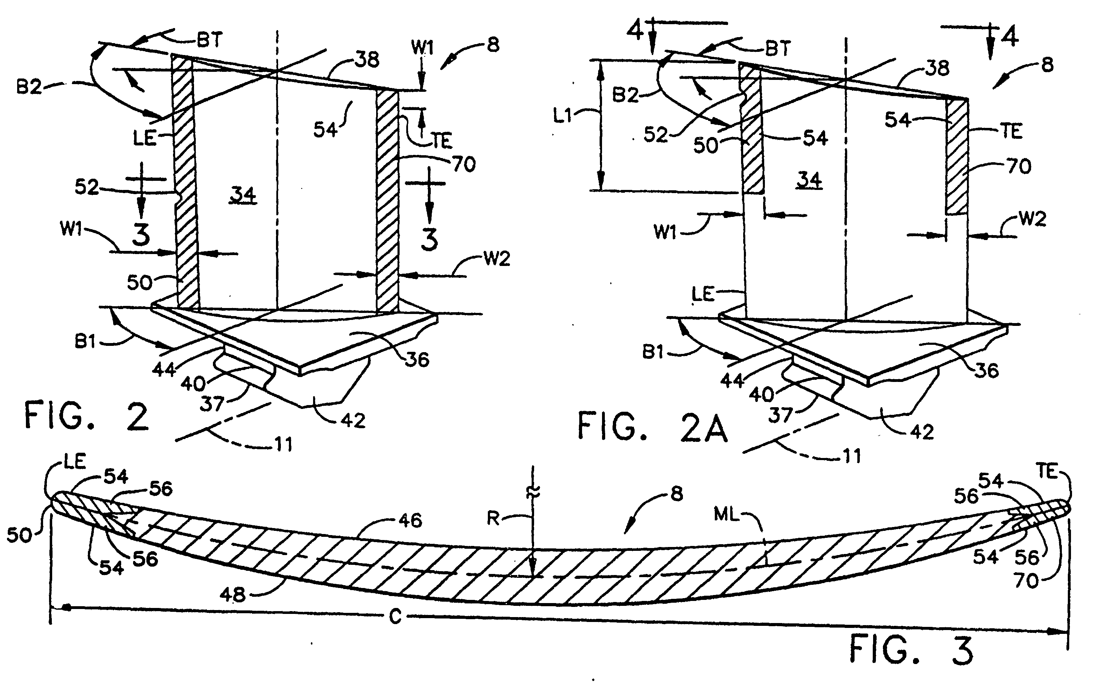

Referring to FIGS. 2 and 3, the compressor blade 8 includes an airfoil 34 extending radially outward from a blade platform 36 to a blade tip 38. The compressor blade 8 includes a root section 40 extending radially inward from the platform 36 to a radially inward end 37 of the root section 40. At the radially inward end 37 of the root section 40 is a blade root 42 which is connected to the platform 36 by a blade shank 44. A chord C of the airfoil 34 is the line between the leading LE and trailing edge TE at each cross section of the blade as illustrated in FIG. 3. The airfoil 34 extends in the chordwise direction between a leading edge LE and a trailing edge TE of the airfoil. A pressure side 46 of the airfoil 34 faces in the general direction of rotation as indicated by the arrow and a suction side 48 is on the other side of the airfoil and a mean-line ML is generally disposed midway between the two faces in the chordwise direction. The airfoil 34 also has a twist whereby a chord angle varies from a first angle B1 at the platform 36 to a second angle B2 at the tip 38 for which the difference is shown by an angle differential BT. The chord angle is defined as the angle of the chord C with respect to the engine centerline 11.

Referring again to FIG. 2, compressor blade 8 has a leading edge section 50 that extends along the leading edge LE of the airfoil 34 from the blade platform 36 to the blade tip 38. The leading edge section 50 includes a predetermined first width W1 such that the leading edge section 50 encompasses nicks 52 and tears that may occur along the leading edge of the airfoil 34. The airfoil 34 subject to a significant tensile stress field due to centrifugal forces generated by the compressor blade 8 rotating during engine operation. The airfoil 34 is also subject to vibrations generated during engine operation and the nicks 52 and tears operate as high cycle fatigue stress risers producing additional stress concentrations around them.

To counter fatigue failure of portions of the blade along possible crack lines that can develop and emanate from the nicks and tears at least one and preferably both of the pressure side 46 and the suction side 48 have a laser shock peened surfaces 54 and a pre-stressed region 56 having deep compressive residual stresses imparted by laser shock peening (LSP) extending into the airfoil 34 from the laser shock peened surfaces as seen in FIG. 3. Preferably, the pre-stressed regions 56 are coextensive with the leading edge section 50 in the chordwise direction to the full extent of width W1 and are deep enough into the airfoil 34 to coalesce for at least a part of the width W1. The pre-stressed regions 56 are shown coextensive with the leading edge section 50 in the radial direction along the leading edge LE but may be shorter, extending from the tip 38 along a portion L1 of the way along the leading edge LE towards the platform 36 as more particularly illustrated in FIG. 2A. This is particularly useful when damaging nicks 52 tend to occur close to the tip 38.

The present invention includes a compressor blade construction with only the trailing edge TE having laser shock peened surfaces 54 on a trailing edge section 70 having a second width W2 and along the trailing edge TE. The associated pre-stressed regions 56 having deep compressive residual stresses imparted by laser shock peening (LSP) extends into the airfoil 34 from the laser shock peened surfaces 54 on the trailing edge section 70. At least one and preferably both of the pressure side 46 and the suction side 48 have a laser shock peened surfaces 54 and a pre-stressed region 56 having deep compressive residual stresses imparted by laser shock peening (LSP) extending into the airfoil 34 from the laser shock peened surfaces on a trailing edge section along the trailing edge TE. Preferably, the compressive pre-stressed regions 56 are coextensive with the leading edge section 50 in the chordwise direction to the full extent of width W2 and are deep enough into the airfoil 34 to coalesce for at least a part of the width W2. The compressive pre-stressed regions 56 are shown coextensive with the leading edge section 50 in the radial direction along the trailing edge TE but may be shorter, extending from the tip 38 a portion of the way along the trailing edge TE towards the platform 36.

The laser beam shock induced deep compressive residual stresses in the compressive pre-stressed regions 56 are generally about 345-1034 MPa (50-150 KPSI-Kilo Pounds per Square Inch) extending from the laser shocked peened surfaces 54 to a depth of about 0,508-1,27 mm (20-50 mils) into laser shock induced compressive residually pre-stressed regions 56. The laser beam shock induced deep compressive residual stresses are produced by repetitively firing a high energy laser beam that is focused on the laser shock peened surface 54 which is covered with paint to create peak power densities having an order of magnitude of a gigawatt/cm². The laser beam is fired through a curtain of flowing water that is flowed over the painted laser shock peened surface 54 and the paint is ablated generating plasma which results in shock waves on the surface of the material. These shock waves are re-directed towards the painted surface by the curtain of flowing water to generate travelling shock waves (pressure waves) in the material below the painted surface. The amplitude and quantity of these shockwaves determine the depth and intensity of compressive stresses. The paint is used to protect the target surface and also to generate plasma. Ablated paint material is washed out by the curtain of flowing water. This and other methods for laser shock peening are disclosed in greater detail in U.S. Patent Serial No. 08/319,346, entitled "LASER SHOCK PEENED ROTOR COMPONENTS FOR TURBOMACHINERY", US-A-5492447 and in U.S. Patent Serial No. 08/363,362, entitled "ON THE FLY LASER SHOCK PEENING" (US-A-5756965).

Referring more specifically to FIG. 3, the present invention includes a compressor blade 8 construction with either the leading edge LE or the trailing edge TE sections or both the leading edge LE and the trailing edge TE sections having laser shock peened surfaces 54 and associated pre-stressed regions 56 with deep compressive residual stresses imparted by laser shock peening (LSP) as disclosed above. The laser shocked surface and associated pre-stressed region on the trailing edge TE section is constructed similarly to the leading edge LE section as described above. Nicks on the leading edge LE tend to be larger than nicks on the trailing edge TE and therefore the first width W1 of the leading edge section 50 may be greater than the second width W2 of the trailing edge section 70. By way of example W1 and W2 may each be about 20% of the length of the chord C.

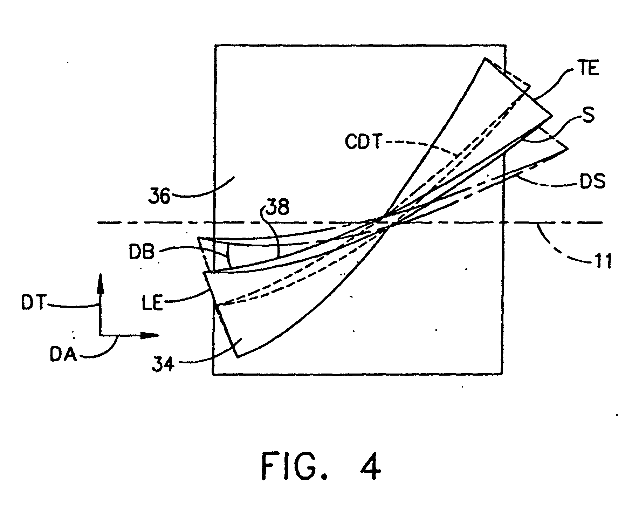

Because compressor blades are generally thin, laser shock peening the compressor blade 8 to form the laser shock peened surfaces 54 and associated pre-stressed regions 56 with deep compressive residual stresses as disclosed above can cause compressor blade distortion as illustrated in FIG. 4. The distortion is generally thought to be caused by the curling of the airfoil due to the deep compressive stresses imparted by the laser shock peening process. A cumulative effect from the platform 36 of the airfoil to its tip 38 is illustrated in the form of four types of distortion at the blade tip 38. The first type of distortion is in the blade twist defined earlier as the chord angle with respect to the engine centerline 11 and is illustrated as a blade twist distortion DB between chords of a designed airfoil cross-sectional shape S, drawn with a solid line, and a distorted shape DS, drawn-with a dashed line. Second and third types of distortion are axial and tangential leaning illustrated as axial and tangential displacement DA and DT respectively of the leading edge LE and/or the trailing edge TE of the airfoil 34 at the tip 38. A fourth type of distortion is the curvature of the mean-line ML. The mean-line ML can generally be described by a radius of curvature R which indicates how sharp the curvature is between the leading edge LE and the trailing edge TE of the airfoil 34. The distortion may either increase or decrease the radius of curvature R and sharpness of the curvature.

Presented herein are two means by which the present invention may be used to overcome the distortion problem. The first is to control the patterns and amounts of laser energy used to limit the distortion to within acceptable limits or tolerances. The second is to counteract the distortion by producing contra-distorting features in the airfoil such as a contra-distorting twist or patterns of laser shocked peened regions in the airfoil. These and other techniques for controlling laser shock peening of thin airfoils, particularly compressor airfoils, are described in U.S. Patent Serial No. 08/(GE ATTORNEY DOCKET NO. 13DV-12148), entitled "DISTORTION CONTROL FOR LASER SHOCK PEENED GAS TURBINE ENGINE COMPRESSOR BLADE EDGES", US-A-5531570.

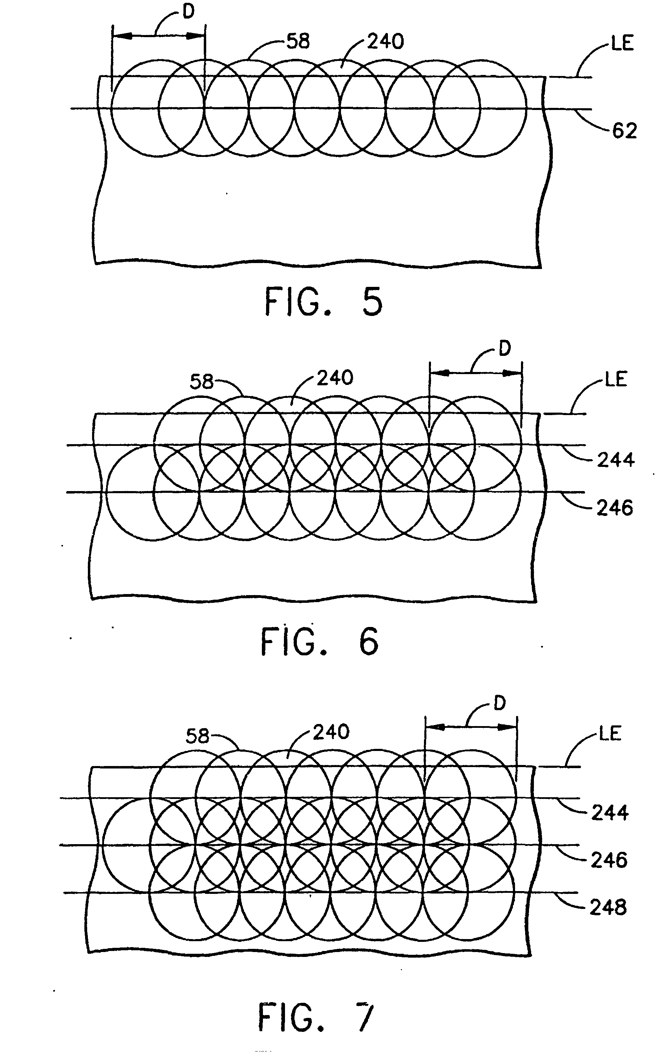

A number of different methods may be used to limit the amount of distortion exhibited by the compressor blade due to the laser shock peening of the leading and/or trailing edges. One of the variables that can be controlled is strength or power of the laser beam used during the laser shock peening process. Laser shock peening has, for example, been tested on a General Electric LM5000 compressor blade using a 5.6 millimeter diameter spot for the focused laser beam and varying the power from between 100 and 200 joules per square centimeter. Three levels of laser power were used, 100, 150 and 200 joules per centimeter square. FIGS. 5, 6 and 7 illustrate, by way of example, three types of laser beam patterns used to form circular laser shocked areas 240 which are used to form the peened surfaces 54 and their associated pre-stressed regions 56. The circular laser shocked areas 240 are generally arranged in patterns of overlapping circular laser shocked areas 240 centered along first, second and third centering lines 244, 246 and 248 respectively. The circular laser shocked areas 240 represent the areas hit by a laser beam during the laser shock peening process. In addition, the spot patterns were varied to see the result on the amount of distortion that the blades exhibited. The first pattern illustrated had a centerline parallel to leading edge and was offset from the leading edge by 1.77 millimeters so that the outer edge of the spots were beyond the leading edge itself. A second pattern used a 50% overlap. A second pattern has two rows of laser spots. The first row is centered on the leading edge and the second row is centered 2.8 millimeters from the leading edge. A third pattern centers a third row of 50% overlapping spots along a third centerline, 1.4 millimeter from the leading edge or halfway between the first centerline and the second centerline of the laser spots. As expected, the stress concentration factor Kt generally decreases within increasing power. Furthermore, the more rows the lower the stress concentration factor. As expected, the amount of distortion increases with the greater amount of power and the larger or the greater number of passes. An additional factor to be considered is the amount of overlap between the various rows, where it appears that the greater the overlap, the greater the amount of distortion. Therefore, one can limit the amount of distortion by controlling these parameters as well as perhaps others. These distortion.limiting parameters are (1) the amount of power per square centimeter used for the laser spot, (2) the amount of overlap such as may be based on spacing between laser spots in a given row and the number and the spacing between overlapping rows of laser spots, and (3) the number of passes or times each spot is hit on the laser shocked peened surface.

Contra-distorting features (or means for counteracting the distortion due to laser shock peening) in the airfoil 34 such as a contra-distorting twist or asymmetric applications of laser shocked peened regions in the airfoil 34 may be used to overcome distortion problems by counteracting the distortion. Which contra-distorting feature or means for counteracting the distortion due to laser shock peening may have to be decided by empirical, semi-empirical, or analytical methods or a combination of any of these methods. The amount of power, the number of times each laser beam spot is hit, the amount of overlap, the number as well as the particular contra-distorting feature or features best suited for a particular application requires experimentation and development. The object is to design for a desired damage tolerance as represented by an effective Kt in the leading and/or trailing edges of the airfoil.

One contra-distorting feature or means for counteracting the distortion due to laser shock peening is to only laser shock peen a patch of the leading edge LE near the tip of the airfoil 34 perhaps as much as the top one half of the airfoil and over a width of about 20% of the chord length from the leading and/or trailing edge. The overall distortion effect is diminished because the rest of the non laser shock peened radial length of the blade tends to counteract the distortion. Another means for counteracting the distortion due to laser shock peening is to only laser shock peen one side of the airfoil, either the pressure side or the suction side. Another means for counteracting the distortion due to laser shock peening is to pre-twist the airfoil such that the laser shock peening will twist it in an opposite manner such that the finished airfoil will be within acceptable tolerances or predetermined design limits with regards to its designed twist.

The method by which the airfoil is laser shock peened can also be used to counteract the distortion due to laser shock peening such as laser shock peening the airfoil from the platform or base to the tip of the airfoil along a strip adjoining the leading and/or the trailing edge. Unbalance energies may be used for airfoils that are laser shock peened on both the pressure and the suction sides. For example in a range of 100 - 200 joules/cm² one side can be laser shock peened using a power in the lower end of this range and the other side can be laser shock peened using a power in the upper end of this range. Alternatively, or additionally one side can be laser shock peened at each point more times than the side. If multiple rows of overlapping laser shock peened spots are used the adjacent rows should be laser shock peened in order starting with the row furthest from the leading edge.

The invention has been described for use with a compressor airfoil but it also has applications for a compressor vane airfoil. While the preferred embodiment of the present invention has been described fully in order to explain its principles, it is understood that various modifications or alterations may be made to the preferred embodiment without departing from the scope of the invention as set forth in the appended claims.

## Claims

1. A gas turbine engine component (8) comprising:
a metallic airfoil (34) having a leading edge (LE) and a trailing edge (TE) and a pressure side (46) and suction side (48),
at least one laser shock peened surface (54) on at least one side (46, 48) of said airfoil,
said laser shock peened surface (54) extending radially along at least a portion of at least one edge (LE, TE) and extending chordwise from said at least one edge up to a predetermined width (W1, W2) and comprising
a region (56) having deep compressive residual stresses imparted by laser shock peening (LSP) extending depthwise into said airfoil from said laser shock peened surface (54) and for at least a part of said predetermined width (W1, W2).

2. The component recited in claim 1 further comprising:
a first laser shock peened surface (54) located along said pressure side (46) of said leading edge (LE), and
a first region (56) having deep compressive residual stresses imparted by laser shock peening (LSP) extending into said airfoil (34) from said first laser shock peened surface (54),
a second laser shock peened surface (54) located along said suction side (48) of said leading edge (LE), and
a second region (56) having deep compressive residual stresses imparted by laser shock peening (LSP) extending into said airfoil from said second laser shock peened surface (54).

3. A component (8) recited in claim 1 further comprising:
pressure and suction side laser shock peened trailing edge surfaces (54) extending radially along at least a portion of said trailing edge (TE) and extending chordwise from said trailing edge on said pressure (46) and suction (48) sides respectively of said airfoil,
a pressure side trailing edge laser shock peened region (56) having deep compressive residual stresses imparted by laser shock peening (LSP) extending into said airfoil from said pressure side laser shock peened surface, and
a suction side trailing edge laser shock peened region (56) having deep compressive residual stresses imparted by laser shock peening (LSP) extending into said airfoil from said suction side laser shock peened surface.

4. A component (8) recited in claim 1 wherein the component is a compressor blade.

5. A component (8) recited in claim 1 wherein the component is a repaired compressor blade.

6. A component (8) recited in claim 3 wherein said laser shock peened regions extending into said airfoil from said laser shock peened surfaces are formed by simultaneously laser shock peening both sides of said airfoil.

7. A gas turbine component (8) recited in claim 1 wherein said at least one edge is a trailing edge (TE), said laser shock peened surface extending radially along at least a portion of said trailing edge and extending chordwise from said trailing edge; and,
a region having deep compressive residual stresses imparted by laser shock peening (LS)) extending into said airfoil from said laser shock peened surface.

8. A component (8) recited in claim 7 further comprising:
a first laser shock peened surface extending radially along at least a portion of said trailing edge and extending chordwise from said trailing edge on a pressure side of said airfoil,
a first region having deep compressive residual stresses imparted by laser shock peening (LSP) extending into said airfoil from said first laser shock peened surface,
a second laser shock peened surface extending radially along at least a portion of said trailing edge and extending chordwise from said trailing edge on a suction side of said airfoil, and
a second region having deep compressive residual stresses imparted by laser shock peening (LSP) extending into said airfoil from said second laser shock peened surface.

9. A gas turbine engine component (8) recited in claim 1 comprising:
a first laser shock peened surface extending radially along at least a portion of one of said edges (LE, TE) on a side (46, 48) of said airfoil and extending radially along and chordwise from said one of said edges.

## Revendications

1. Composant (8) de moteur à turbine à gaz, comprenant :
un élément à profil d'aile métallique (34) ayant un bord d'attaque (LE) et un bord de fuite (TE) et une face de pression (46) et une face de dépression (48),
au moins une surface (54) traitée par chocs laser sur au moins une face (46, 48) dudit élément à profil d'aile,
ladite surface (54) traitée par chocs laser s'étendant radialement le long d'au moins une partie d'au moins un bord (LE, TE) et s'étendant dans le sens de la corde depuis ledit au moins un bord jusqu'à une largeur préalablement déterminée (W1, W2) et comprenant
une région (56) ayant des contraintes résiduelles de compression profondes communiquées par traitement par chocs laser (LSP) s'étendant dans le sens de la profondeur dans ledit élément à profil d'aile depuis ladite surface (54) traitée par chocs laser et sur au moins une partie de ladite largeur préalablement déterminée (W1, W2).

2. Composant selon la revendication 1, comprenant en outre :
une première surface (54) traitée par chocs laser située le long de ladite face de pression (46) dudit bord d'attaque (LE), et
une première région (56) ayant des contraintes résiduelles de compression profondes communiquées par traitement par chocs laser (LSP) s'étendant dans ledit élément à profil d'aile (34) depuis ladite première surface (54) traitée par chocs laser,
une deuxième surface (54) traitée par chocs laser située le long de ladite face de dépression (48) dudit bord d'attaque (LE), et
une deuxième région (56) ayant des contraintes résiduelles de compression profondes communiquées par traitement par chocs laser (LSP) s'étendant dans ledit élément à profil d'aile depuis ladite deuxième surface (54) traitée par chocs laser.

3. Composant (8) selon la revendication 1, comprenant en outre :
des surfaces (54) de bord de fuite, traitées par chocs laser, de faces de pression et de dépression, s'étendant radialement le long d'au moins une partie dudit bord de fuite (TE) et s'étendant dans le sens de la corde depuis ledit bord de fuite sur lesdites faces de pression (46) et de dépression (48) respectivement dudit élément à profil d'aile,
une région (56), traitée par chocs laser, de bord de fuite de face de pression ayant des contraintes résiduelles de compression profondes communiquées par traitement par chocs laser (LSP) s'étendant dans ledit élément à profil d'aile depuis ladite surface traitée par chocs laser de face de pression, et
une région (56), traitée par chocs laser, de bord de fuite de face de dépression ayant des contraintes résiduelles de compression profondes communiquées par traitement par chocs laser (LSP) s'étendant dans ledit élément à profil d'aile depuis ladite surface traitée par chocs laser de face de dépression.

4. Composant (8) selon la revendication 1, dans lequel le composant est une aube de compresseur.

5. Composant (8) selon la revendication 1, dans lequel le composant est une aube de compresseur réparée.

6. Composant (8) selon la revendication 3, dans lequel lesdites régions traitées par chocs laser s'étendant dans ledit élément à profil d'aile depuis lesdites surfaces traitées par chocs laser sont formées en traitant simultanément par chocs laser les deux faces dudit élément à profil d'aile.

7. Composant (8) selon la revendication 1, dans lequel ledit au moins un bord est un bord de fuite (TE), ladite surface traitée par chocs laser s'étendant radialement le long d'au moins une partie dudit bord de fuite et s'étendant dans le sens de la corde depuis ledit bord de fuite ; et
une région ayant des contraintes résiduelles de compression profondes communiquées par traitement par chocs laser (LSP) s'étendant dans ledit élément à profil d'aile depuis ladite surface traitée par chocs laser.

8. Composant (8) selon la revendication 7, comprenant en outre :
une première surface traitée par chocs laser s'étendant radialement le long d'au moins une partie dudit bord de fuite et s'étendant dans le sens de la corde depuis ledit bord de fuite sur une face de pression dudit élément à profil d'aile,
une première région ayant des contraintes résiduelles de compression profondes communiquées par traitement par chocs laser (LSP) s'étendant dans ledit élément à profil d'aile depuis ladite première surface traitée par chocs laser,
une deuxième surface traitée par chocs laser s'étendant radialement le long d'au moins une partie dudit bord de fuite et s'étendant dans le sens de la corde depuis ledit bord de fuite sur une face de dépression dudit élément à profil d'aile, et
une deuxième région ayant des contraintes résiduelles de compression profondes communiquées par traitement par chocs laser (LSP) s'étendant dans ledit élément à profil d'aile depuis ladite deuxième surface traitée par chocs laser.

9. Composant (8) de moteur à turbine à gaz selon la revendication 1, comprenant :
une première surface traitée par chocs laser s'étendant radialement le long d'au moins une partie de l'un desdits bords (LE, TE) sur une face (46, 48) dudit élément à profil d'aile et s'étendant radialement et dans le sens de la corde depuis ledit un desdits bords.

## Patentansprüche

1. Gasturbinentriebwerkskomponente (8) enthaltend:
einen metallischen stromlinienförmigen Abschnitt (34) mit einer Vorderkante (LE) und einer Hinterkante (TE) und einer Druckseite (46) und einer Saugseite (48),
wenigstens eine laserstossgehämmerte Oberfläche (54) auf wenigstens einer Seite (46, 48) des stromlinienförmigen Abschnitts,
wobei sich die laserstossgehämmerte Oberfläche (54) radial entlang wenigstens einem Teil von wenigstens einer Kante (LE, TE) erstreckt und in Sehnenrichtung von der wenigstens einen Kante bis zu einer vorbetimmten Breite (w1, w2) erstreckt und
einen Bereich (56), der tiefe restliche Druckbeanspruchungen hat, die durch Laserstosshämmern (LSP) erteilt sind und sich in Tiefenrichtung in den stromlinienförmigen Abschnitt hinein und für wenigstens einen Teil der vorbestimmten Breite (w1, w2) erstrecken.

2. Komponente nach Anspruch 1, ferner enthaltend:
eine erste laserstossgehämmerte Oberfläche (54), die entlang der Druckseite (54) der Vorderkante (LE) angeordnet ist,
einen ersten Bereich (56), der tiefe restliche Druckbeanspruchungen hat, die durch Laserstosshämmern (LSP) erteilt sind und sich von der ersten laserstossgehämmerten Oberfläche (54) in den stromlinienförmigen Abschnitt hinein erstrecken,
eine zweite laserstossgehämmerte Oberfläche (56), die entlang der Saugseite (48) der Vorderkante (LE) angeordnet ist, und
einen zweiten Bereich (56), der tiefe restliche Druckbeanspruchungen hat, die durch Laserstosshämmern (LSP) erteilt sind und sich von der zweiten laserstossgehämmerten Oberfläche (54) in den stromlinienförmigen Abschnitt hinein erstrecken.

3. Komponente (8) nach Anspruch 1, ferner enthaltend:
druck- und saugseitige laserstossgehämmerte Hinterkantenflächen (54), die sich radial wenigstens entlang einem Teil der Hinterkante (TE) erstrecken und sich in Sehnenrichtung von der Hinterkante auf den Druck- (46) bzw. Saugseiten (48) des stromlinienförmigen Abschnitts erstrecken,
wobei ein druckseitiger laserstossgehämmerter Hinterkantenbereich (56) tiefe restliche Druckbeanspruchungen hat, die durch Laserstosshämmern (LSP) erteilt sind und sich von der druckseitigen laserstossgehämmerten Oberfläche in den stromlinienförmigen Abschnitt hinein erstrecken, und
ein saugseitiger laserstossgehämmerter Hinterkantenbereich (56) tiefe restliche Druckbeanspruchungen hat, die durch Laserstosshämmern (LSP) erteilt sind und sich von der saugseitigen laserstossgehämmerten Oberfläche in den stromlinienförmigen Abschnitt hinein erstrecken.

4. Komponente (8) nach Anspruch 1, wobei die Komponente eine Verdichterschaufel ist.

5. Komponente (8) nach Anspruch 1, wobei die Komponente eine reparierte Verdichterschaufel ist.

6. Komponente (8) nach Anspruch 3, wobei die laserstossgehämmerten Bereiche, die sich von den laserstossgehämmerten Oberflächen in den stromlinienförmigen Abschnitt hinein erstrecken, durch gleichzeitiges Laserstosshämmern beider Seiten des stromlinienförmigen Abschnitts gebildet sind.

7. Gasturbinentriebwerkskomponente (8) nach Anspruch 1, wobei die wenigstens eine Kante eine Hinterkante (TE) ist, die laserstossgehämmerte Oberfläche sich radial entlang wenigstens einem Teil der Hinterkante erstreckt und in Sehnenrichtung von Hinterkante ausgeht, und
ein Bereich tiefe restliche Druckbeanspruchungen hat, die durch Laserstosshämmern (LSP) erteilt sind und sich von der laserstossgehämmerten Oberfläche in den stromlinienförmigen Abschnitt hinein erstrecken.

8. Komponente (8) nach Anspruch 7, ferner enthaltend:
eine erste laserstossgehämmerte Oberfläche, die sich radial entlang wenigstens einem Teil der Hinterkante erstreckt und auf einer Druckseite des stromlinienförmigen Abschnitts in Sehnenrichtung von der Hinterkante ausgeht,
einen ersten Bereich, der tiefe restliche Druckbeanspruchungen hat, die durch Laserstosshämmern (LSP) erteilt sind und sich von der ersten laserstossgehämmerten Oberfläche in den stromlinienförmigen Abschnitt hinein erstrecken,
eine zweite laserstossgehämmerte Oberfläche, die sich radial entlang wenigstens einem Teil der Hinterkante erstreckt und auf einer Saugseite des stromlinienförmigen Abschnitts in Sehnenrichtung von der Hinterkante ausgeht, und
einen zweiten Bereich, der tiefe restliche Druckbeanspruchungen hat, die durch Laserstosshämmern (LSP) erteilt sind und sich von der zweiten laserstossgehämmerten Oberfläche in den stromlinienförmigen Abschnitt hinein erstrecken.

9. Gasturbinentriebwerkskomponente (8) nach Anspruch 1, enthaltend:
eine erste laserstossgehämmerte Oberfläche, die sich radial entlang wenigstens einem Teil der Kanten (LE, TE) auf einer Seite (46, 48) des stromlinienförmgen Abschnitts erstreckt und radial entlang und in Sehnenrichtung von einer der Kanten ausgeht.
